# EUROPÄISCHE PATENTANMELDUNG

(11) **EP 0 710 000 A1**
(43) Veröffentlichungstag der Anmeldung: **01.05.1996**
(21) Anmeldenummer: 95116429.2
(22) Anmeldetag: 18.10.1995
(51) Int. Cl.: H04M 19/08

(54) **Stromversorgungseinrichtung für ein Telekommunikationsendgerät**

(30) Priorität: 26.10.1994 DE 9417202 U
(71) Anmelder: SIEMENS AKTIENGESELLSCHAFT, D-80333 München (DE)
(72) Erfinder: Brandstetter, Alfred, Dipl.-Ing., D-82140 Olching (DE); Biederstedt, Nikolaus, Dipl.-Ing., D-82131 Gauting (DE)

(57) **Zusammenfassung**

Die Erfindung betrifft eine Stromversorgungseinrichtung für ein Telekommunikationsendgerät mit von einer Netzspeisung (NS) und mit von einer Fernsprechleitung (a/)b gespeisten elektrischen Schaltungseinrichtungen, wobei die leitungsgespeisten Schaltungseinrichtungen zumindest den Wähl- und Sprechbetrieb ermöglichen. Erfindungsgemäß ist eine Schaltstufe (R) vorgesehen, über die die leitungsgespeisten Schaltungseinrichtungen an die Netzspeisung (NS) anschaltbar sind.

## Beschreibung

Die Erfindung betrifft eine Stromversorgungseinrichtung gemäß dem Oberbegriff des Schutzanspruchs.

Solche Telekommunikationsendgeräte sind beispielsweise öffentliche Kartentelefone oder private Telefonapparate, Faxgeräte, Telefonanrufbeantworter u.ä. Diese Geräte haben meist einen relativ hohen Strombedarf, der nicht mehr wie der eigentliche Wähl- und Sprechbetrieb bei einem herkömmlichen Telefonapparat aus der Telefonleitung her alleine gedeckt werden kann. Zusätzlich ist daher eine weitere Energieversorgung, beispielsweise ein eigenes Netzteil zur Anschaltung an das 230-Stromnetz oder eine andere elektrische Energiequelle vorgesehen, die die verbrauchsintensiven Baugruppen des Telekommunikationsendgerätes mit Strom versorgt. Ein Komforttelefon beispielsweise mit Anrufbeantworter weist leitungsgespeiste, d.h. von der Telefon- oder Fernsprechleitung her gespeiste und daneben netzgespeiste elektrische Schaltkreise und Baugruppen auf.

Um beispielsweise Rufnummern in den Rufnummernspeicher des Telefonapparates einzugeben, muß der Hörer des Telefonapparates abgenommen werden, da die Tastatureingabe bzw. der dazugehörige Schaltkreis leitungsgespeist ist. Dies ist ähnlich bei der Programmierung von Leistungsmerkmalen und dem Abfragen spezieller Einstellungen beispielsweise bei einem Faxgerät. Bei einem Kartentelefon muß ebenfalls der Hörer abgenommen werden, um Rufnummern auf der Telefonkarte zu bearbeiten, um eine Bearbeitung bei einer Börsenanwendung durchzuführen und bei ähnlichen Vorgängen, die nicht das eigentliche Telefongespräch betreffen. Durch die Abnahme des Hörers ist zu dem die Leitung unnötigerweise belegt und so der Anschluß für ankommende Anrufe gesperrt.

Der Erfindung liegt die Aufgabe zugrunde, eine Stromversorgungseinrichtung für ein Telekommunikationsendgerät anzugeben, bei dem solche Anwendungen auch bei aufgelegtem Hörer durchgeführt werden können.

Diese Aufgabe wird erfindungsgemäß durch die im Schutzanspruch angegebenen Merkmale gelöst.

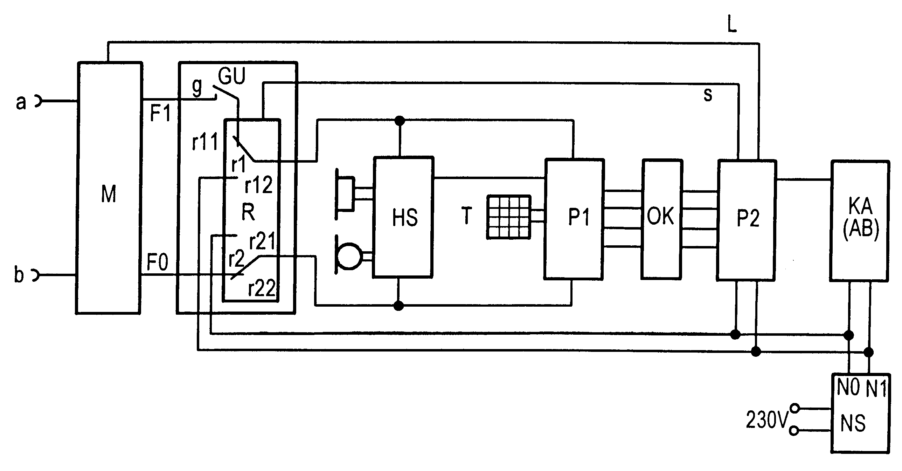

Im folgenden wird die Erfindung anhand eines in der Zeichnung dargestellten Ausführungsbeispieles beschrieben. In der einzigen Figur sind die für das Verständnis der Erfindung notwendigen Baugruppen und Schaltkreise eines Kartentelefons dargestellt.

An einer Fernsprechleitung a/b ist ein Modem M angeschaltet. Zur Stromversorgung für die, dem Modem M nachgeschalteten Baugruppen sind am Modem M zwei Fernspeiseadern F0, F1 angeschaltet.

Über einen Gabelumschalter GU führen diese Fernspeiseadern F1, F0 zu einer Hör-Sprechschaltung HS und zu einem Prozessorbaustein P1. Die Hör-Sprechschaltung HS und der Prozessorbaustein P1 sind über eine Leitung miteinander verbunden. Am Prozessorbaustein P1 ist eine Tastatur T angeschaltet.

Die Hör- Sprechschaltung HS und der Prozessorbaustein P1 sind leitungsgespeist und für den Wähl- und Sprechbetrieb zuständig.

Zur Durchführung von weiteren Leistungsmerkmalen ist ein Prozessorbaustein P2 vorgesehen, der über einen Optokoppler OK und über ein Bus-System mit dem Prozessorbaustein P1 verbunden ist. Der Prozessorbaustein P2 ist netzgespeist und hierzu über Netzspeiseadern N0, N1 an einer Netzspeisung NS angeschaltet. Diese Netzspeisung ist am handelsüblichen Lichtnetz mit 230 V angeschalten. Der Prozessorbaustein P2 ist über eine Signalleitung L mit dem Modem M verbunden.

Für weitere Leistungsmerkmale ist beispielsweise eine Kartenauswerteeinrichtung KA vorgesehen, die über eine Leitung mit dem Prozessorbaustein P2 verbunden ist. Diese Kartenauswerteeinrichtung KA ist ebenfalls an den Netzspeiseadern N0, N1 angeschaltet.

Anstelle der Kartenauswerteeinrichtung KA kann für zusätzliche Leistungsmerkmale beispielsweise ein Anrufbeantworter AB vorgesehen sein. Desweiteren kann auch ein Faxgerät mit dem Telkommunikationsendgerät verbunden oder in diesem integriert sein.

Der Gabelumschalter GU weist einen Schaltkontakt g auf, über den die Fernspeiseader F1 zu der Hör-Sprechschaltung HS und dem Prozessorbaustein P1 führt.

Erfindungsgemäß führt diese Fernspeiseader F1 über einen dem Schaltkontakt g nachgeschalteten Schaltkontakt r1 eines Relais R zu den genannten Bausteinen. Analog hierzu führt die Fernspeiseader F0 über einen Schaltkontakt r2 des Relais R ebenfalls zu diesen Bausteinen. Die Schaltkontakte r1, r2 befinden sich hierbei jeweils in einer ersten Schaltkontaktstellung r11 bzw. r21.

In einer zweiten Schaltkontaktstellung r12 bzw. r22 der Schaltkontakte r1 bzw. r2 werden anstelle der Fernspeiseadern F1, F0 die Netzspeiseadern N1, N0 zu der Hör-Sprechschaltung HS und dem Prozessorbaustein P1 geführt. Das Relais R wird vom Prozessorbaustein P2 angesteuert und ist hierzu mit diesem über eine Steuerleitungen S verbunden.

An Stelle des Relais R kann auch eine andere zweipolige Schaltstufe, beispielsweise ein Optokoppler vorgesehen sein.

Durch die erfindungsgemäße Stromversorgungseinrichtung erfolgt eine wahlweise Stromversorgung der Hör-Sprechschaltung HS und des Prozessorbausteins P1 entweder durch die Fernsprechleitung a/b, oder durch die Netzspeisung NS. Aufgrund vor verschiedenen, vorgebbaren Kriterien kann die Umschaltung zwischen diesen beiden Speisungsarten erfolgen. Eine Umschaltung auf die Netzspeisung NS kann beispielsweise erfolgen, wenn die Fernspeisung durch die Fernsprechleitung a/b unterbrochen ist. Andererseits kann bei einem Netzausfall, d.h. bei ausgefallener Netzspeisung NS eine Notversorgung durch die Fernsprechleitung a/b erfolgen.

Die Umschaltung von der Netzspeisung auf die Fernspeisung kann beispielsweise auch nach einer erfolgten Zielwahl erfolgen. Diese Umschaltung kann weiter davon abhängig gemacht werden, ob eine nichtzulässige Rufnummer angewählt wurde.

## Patentansprüche

1. Stromversorgungseinrichtung für ein Telekommunikationsendgerät mit von einer Netzspeisung (NS) und mit von einer Fernsprechleitung (a/)b gespeisten elektrischen Schaltungseinrichtungen, wobei die leitungsgespeisten Schaltungseinrichtungen zumindest den Wähl- und Sprechbetrieb ermöglichen,
**dadurch gekennzeichnet,**
daß eine Schaltstufe (R) vorgesehen ist, über die die leitungsgespeisten Schaltungseinrichtungen an die Netzspeisung (NS) anschaltbar sind.
